# EUROPEAN PATENT APPLICATION

(11) **EP 2 015 415 A1**
(43) Date of publication of application: **14.01.2009**
(21) Application number: 07252800.3
(22) Date of filing: 13.07.2007
(51) Int. Cl.: H02G 1/06, B65H 49/06, B65H 57/20

(54) **Apparatus for unwinding a wire or cable from a cable spool**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

The present invention comprises a cable installation apparatus (10). A cable spool (100) is received on the base (40) of a support framework (20) and is rotated relative to a rotor arm (60) of the apparatus. The rotor arm (60) comprises a guiding means (70) which guides a free end (110) of the cable away from the cable spool (100); the free end (110) then passes through a guide ring (50) provided in the apparatus that enables the cable to be fed away from the apparatus such that it may be installed.

## Description

The present application relates to an apparatus for use in installing a cable and in particular to an apparatus for use in installing cables in telephone exchanges.

The Main Distribution Frame (MDF) is a signal distribution frame that is used to connect internal cabling and equipment to external cables and plant. The internal and external cables are terminated at the MDF and jumper cables are used to provide a connection between the two termination points. For a telephone exchange covering a large urban area then the jumper cable runs may be in excess of 100 metres.

The connection between the two connections is made by pulling an appropriate length of jumper cable from a spool. In order to facilitate the making of the connection, the jumper cable has a relatively thin and brittle outer coating. When a jumper cable is being pulled from a cable spool it is not uncommon for the cable insulation to be damaged at one or more locations. It is believed that the damage is caused by the jumper wire that is being pulled from the spool rubbing on other jumper wires that it passes over, especially when it passes over wires that are bent at right angles or that pass through jumper rings. This movement of the jumper wire being installed causes damage to the wires that the installed wire moves over: it is very rare that the wire being installed is damaged. The frictional forces that occur lead to a localised build-up of heat. This then causes the cable insulation to melt, or to be weakened such that the insulation is more susceptible to mechanical damage. Once the insulation has become damaged then it is highly likely that short circuits or contacts between other damaged wires will occur.

According to a first aspect of the present invention there is provided a cable installation apparatus comprising: a base for receiving a cable spool; a support framework comprising a guide ring; a rotor arm comprising a guiding means wherein, in use: a cable spool is placed on the base, a free end of a cable received on the cable spool is passed through the rotor arm guiding means and the guide ring; and the rotor arm is rotated relative to the cable spool, the rotation causing the cable received on the cable spool to be unwound from the cable spool.

The apparatus may further comprise a vertical axle received upon the base, wherein, in use, a cable spool may be received upon the vertical axle. The rotor arm may be coupled to the vertical axle.

In one embodiment of the present invention the apparatus preferably further comprises drive means, the drive means, in use, being arranged to rotate the rotor arm relative to a cable spool received upon the base. The drive means may be arranged to, in use, rotate the rotor arm.

Alternatively, the drive means may be arranged to, in use, rotate the cable spool. The rotor arm may be fixedly coupled to the vertical axle and the drive means arranged to, in use, rotate the vertical axle.

In a further alternative a cable spool may be received on a rotatable central region of the base and the drive means is arranged to, in use, rotate the base central region. Furthermore, a cable spool may be received on a rotatable central region of the base and is coupled to the vertical axle such that the drive means is arranged to, in use, rotate the vertical axle.

The invention will be described with reference to the following Figures, which are provided by way of explanation only, in which:
Figures 1 to 4 show a schematic depiction of a first embodiment of a cable installation apparatus according to the present invention;
Figure 5 shows a schematic depiction of a second embodiment of a an apparatus according to the present invention;
Figure 6 shows a schematic depiction of a third embodiment of a an apparatus according to the present invention; and
Figure 7 shows a schematic depiction of a fourth embodiment of a an apparatus according to the present invention;

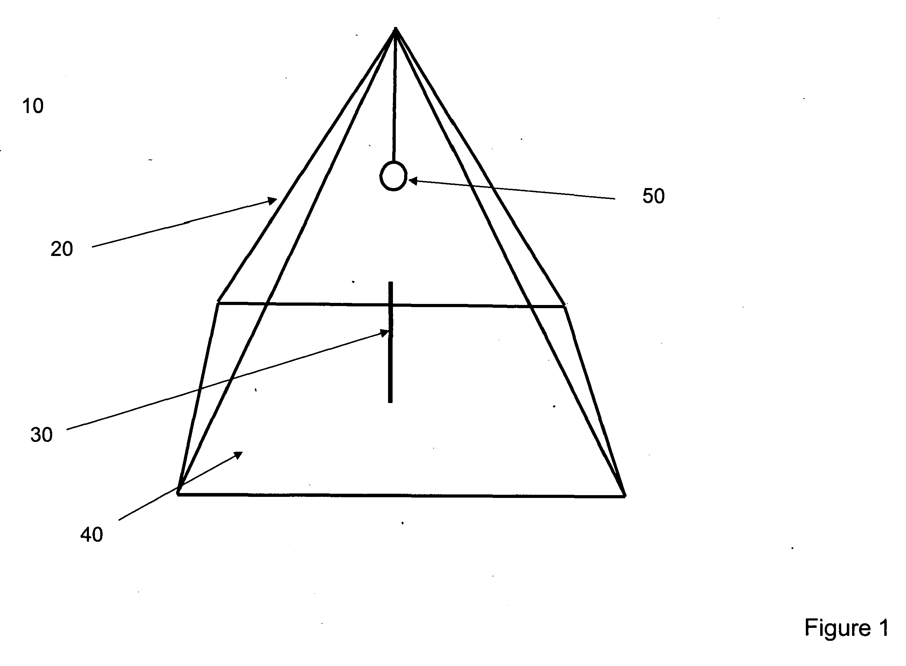

Figures 1 to 4 show a schematic depiction of a first embodiment of a cable installation apparatus 10 according to the present invention. As is shown in Figure 1, the apparatus 10 comprises a support framework 20, a vertical axle 30, a base 40, a guide ring 50, rotor arm 60 and guiding means 70. The vertical axle 30 is mounted at or near to the centre of the base 40. The framework 20 is arranged such that a guide ring 50 is supported above the vertical axis 30.

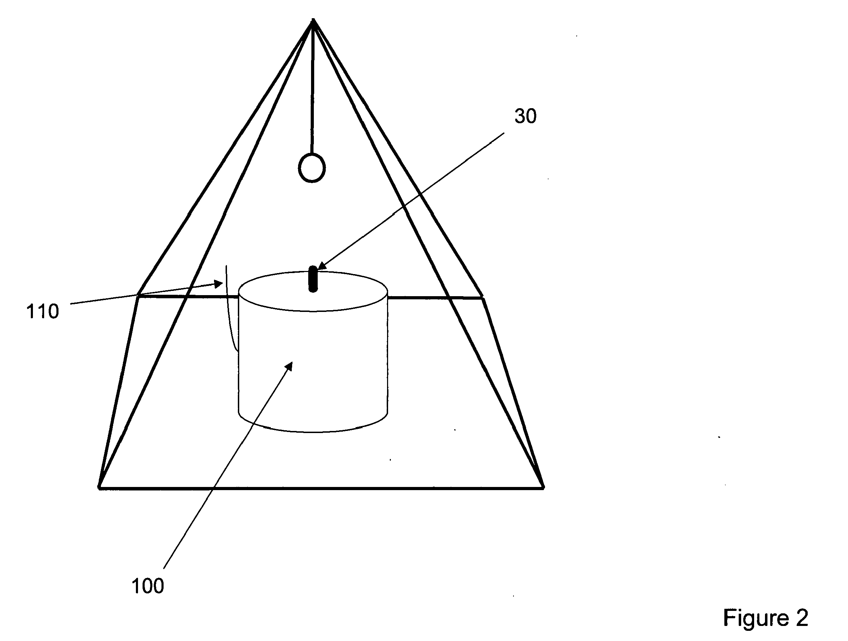

Referring to Figure 2, it can be seen that a cable spool 100 can be received within the apparatus. The cable spool is received on the vertical axle 30 such that an end of the spool is received on the base 40 of the apparatus, with an end of the vertical axle protruding above the height of the spool. The free end 110 of the cable held on the spool can then be unwound from the spool.

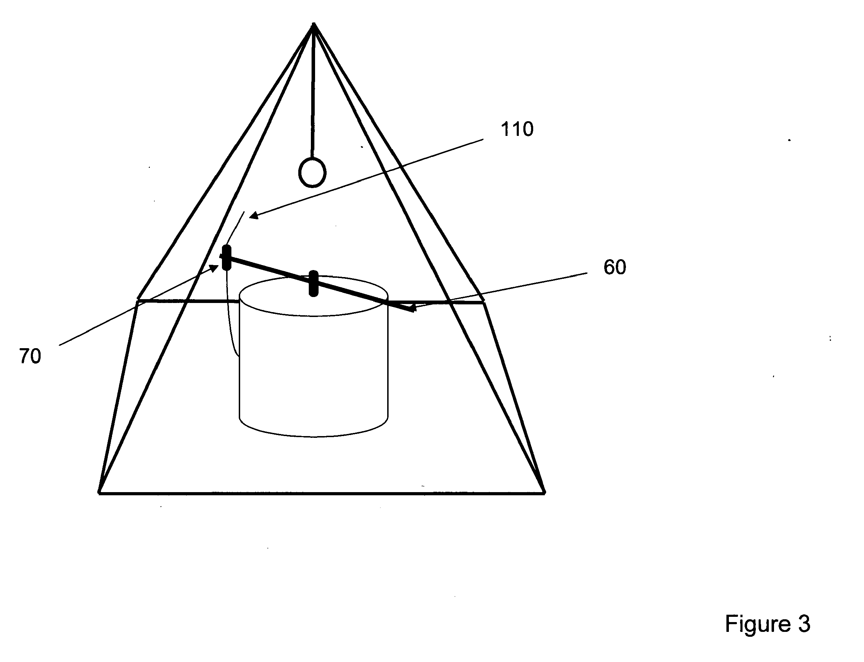

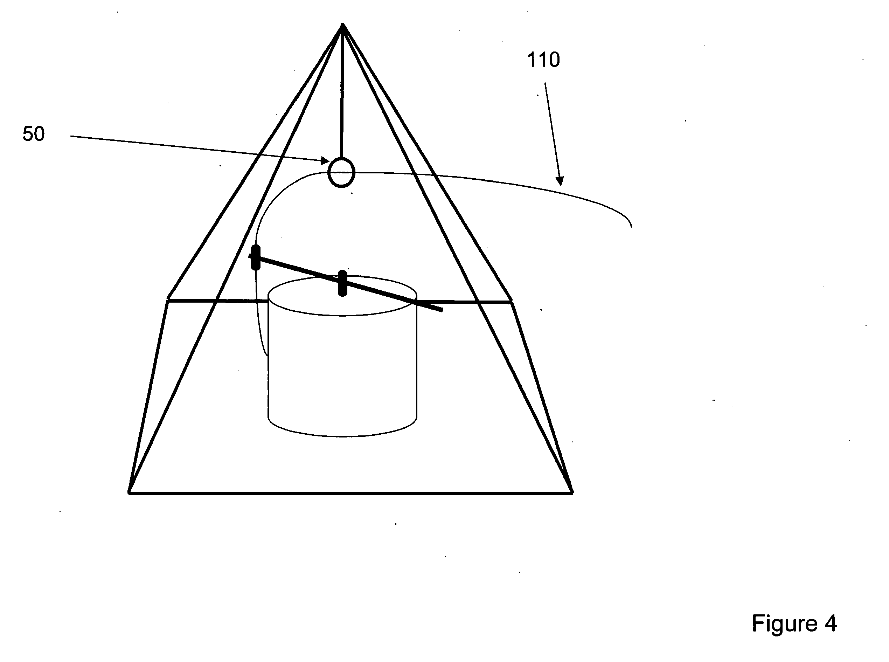

Referring to Figure 3 a rotor arm 60, which comprises a guiding means 70, is connected to the vertical axle 30 such that the rotor arm is able to move relative to the spool. A free end 110 of the cable is removed from the spool and then passed through the guiding means 70 of the rotor arm. Referring to Figure 4, the free end of the cable is then passed through the guide ring 50 and then passed out of the apparatus, such that the cable can be used in an installation.

By rotating the rotor arm 60 relative to the spool, the cable can be gently removed from the spool by the action of the rotor arm. The cable can then be easily pulled through the guiding means of the rotor arm and the guide ring. By using the apparatus of the present invention the tensions in the cable are significantly decreased. Preferably, the rotor arm is fitted to the vertical axle using a ball bearing race to facilitate the rotational movement of the rotor. Thus, even though the cable spool is free to rotate about the vertical axle, the friction between the spool and the base will prevent the rotation of the spool as it is much easier to rotate the rotor arm. To simplify the operation and set-up of the apparatus, the ball bearing race may be provided such that it can be push-fitted into the vertical axle once the cable has been inserted.

It will be understood that during the manufacturing process, a twist will be applied to the jumper wire (or other cable). When the cable is installed using an apparatus according to the present invention then the degree of twist on the installed cable will vary in accordance with the vertical orientation of the cable spool relative to the apparatus. This variation has not been observed to cause any problems but the variation may be controlled by altering the twist applied during manufacture or by marking the cable spool to indicate a preferred orientation.

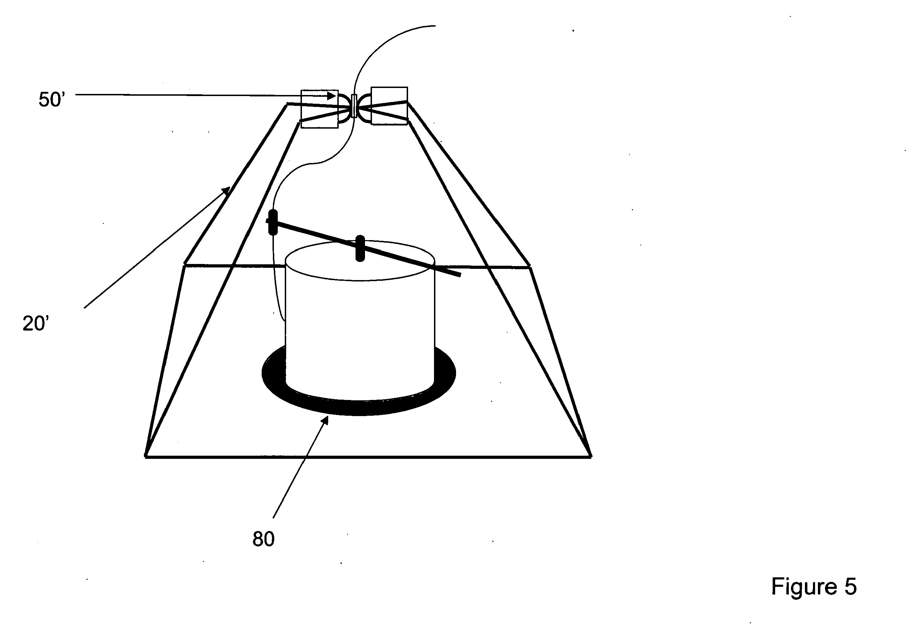

Figure 5 shows a schematic depiction of a second further embodiment of a an apparatus according to the present invention in which the guide ring 50' is directly coupled to the support framework 20', rather than being suspended from it, as is shown in Figures 1-4. Furthermore, the guide ring 50' is orientated such that the cable passes through the ring in a vertical orientation, rather the horizontal orientation as described above with reference to Figures 1-4. The guide ring 50' further comprises a double funnel arrangement which facilitates the motion of the cable through the guide ring, regardless of the position of the rotor arm feeding or the direction and/or inclination at which the cable leaves the guide ring.

The support framework 20 shown in Figures 1 to 4 has a pyramidal shape but the support framework 20' shown in Figure 5 has the approximate shape of a pyramidal frustum. The base also further comprises a central region 80, on which a cable spool is received. The central region 80 preferably comprises a material that reduces the likelihood of a cable spool slipping on the base. The central region 80 may also comprise a curved or vertical lip in order to restrain any movement of the spool across the plane of the base.

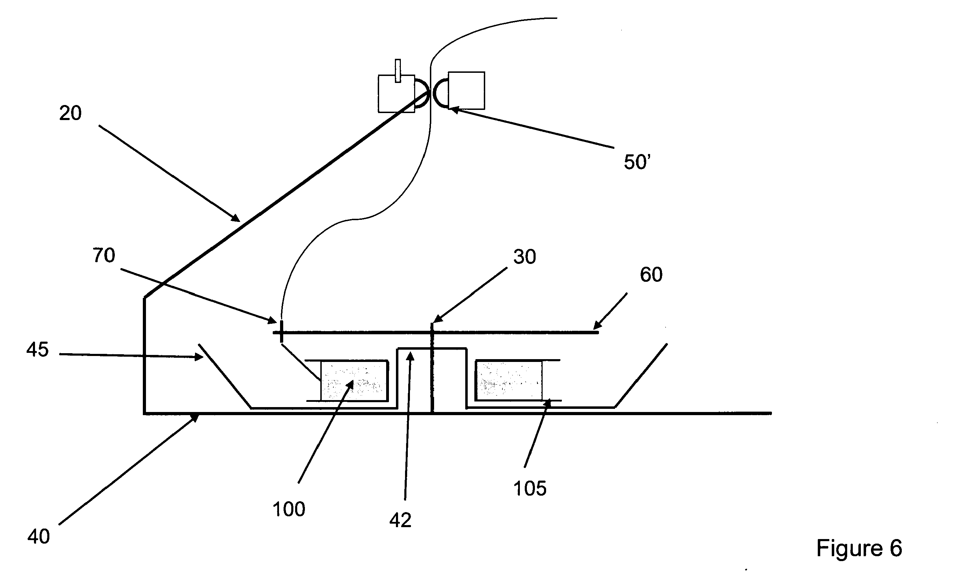

Figure 6 shows a cross-sectional view of a schematic depiction of a third embodiment of the present invention in which a tray 45 is received on the base 40 of the apparatus. The tray 40 comprises a central neck region 42 which can receive a spool 105 of cable 100. The tray is received around vertical axle 30 and the rotor arm is mounted on the top of the vertical axle. The cable is fed from the cable spool 105, through the guiding means 70 and then the guide ring 50'. In use, the cable spool would be inserted into the tray, the rotor arm fitted to the vertical axle and the installation the cable would proceed as described above. The central neck region 42 may be tapered to assist in the location and secure retention of a cable spool.

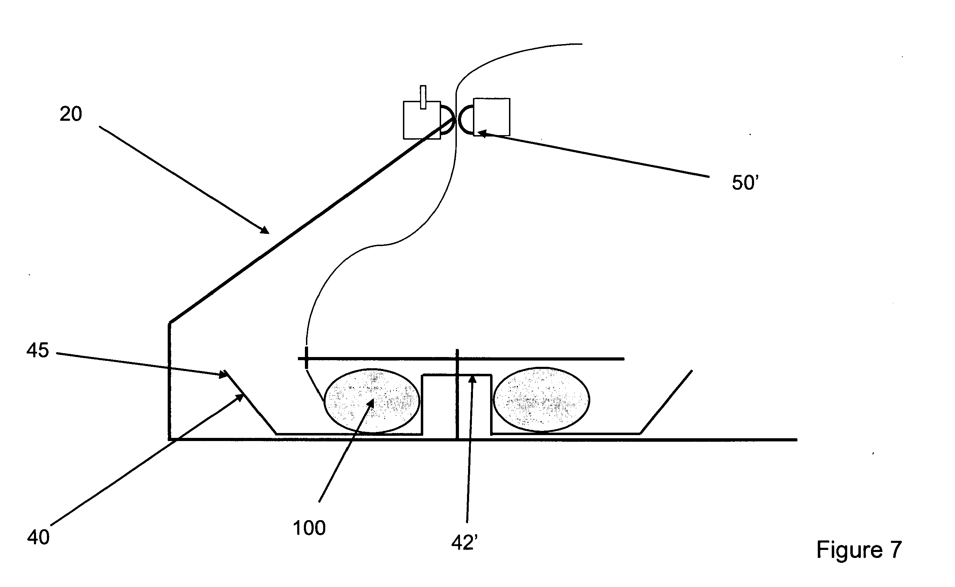

Figure 7 shows a cross-sectional view of a schematic depiction of a fourth embodiment of the present invention in which the cable 100 is supplied without a spool, having the form of a toroidal loop. In this case, the loop can be simply dropped into the tray 40', the tray 40' having a central neck region 42', and then the rotor arm fitted to the vertical axle. The apparatus shown in Figure 7 means that it is no longer necessary to procure jumper wire supplied on a cable spool, which avoids the need to dispose of or recycle the cable spool, leading to a decrease in operational costs.

The central neck region 42' of the tray 40' may have a different diameter than the central neck region 42 of the tray shown in Figure 6, if the annulus defined by the toroidal loop of cable is different from the annulus defined by the cable spool. For example, in a particular embodiment of the invention the central neck region 42 of the tray 40 depicted in Figure 6 has a 76 mm (three inch) diameter such that it can receive a conventional cable spool comprising 600 or 1000 m of cable. It is believed that an equivalent length of cable could be provided using the fourth embodiment depicted in Figure 7 with the central neck region 42' of the tray 40' having a diameter of approximately 127 mm (5 inches). By having the wider central neck region the speed at which the rotor would need to rotate to deliver the same length of cable would be reduced.

It will be understood that the embodiments of the present invention described above may be modified without departing from the scope of the present invention. For example, the central region 80 shown in Figure 5 may be incorporated into the apparatus described above with references to Figures 1-4. The cable is removed from the spool due to the motion of the rotor arm relative to the spool: this may be achieved by the rotation of the rotor arm or alternatively by the rotation of the spool. If the rotor arm is rotated then preferably the vertical axle 30 is locked such that it can not rotate and a cable spool received in the apparatus is coupled to the vertical axis to restrict the rotation of the spool. The inclusion of a central region 80 on the base may also be used to restrict the rotation of the spool. The rotor arm is preferably rotated manually but it may be possible for some form of drive means, such as an electrical motor, may be provided to cause the rotor arm to rotate. If a drive means is used then the drive means preferably further comprises a limiter to prevent the cable from being fed of the drum at too great a speed or damaged through being subjected to excessive tensions.

If the spool is to be rotated then the rotor arm will need to be connected to the vertical axis such that the rotor arm does not move in response to any rotation of the cable spool. The spool may be rotated by being coupled to the vertical axle and the vertical axle being rotated. In this case, the spool may be mounted on a turn-table or similar device to allow it to rotate relative to the base. Alternatively, the base may comprise a central region 80 which is connected to a drive means to allow the rotation of the central region to rotate the spool. In the case where the spool is rotated by the rotation of the central region 80 then the spool may be coupled to a rotatable vertical axis or alternatively the spool may be decoupled from a non-rotatable axis. It will be understood that it is possible to provide the rotation of the rotor arm relative to the spool by rotating the rotor arm and the spool in counter-rotating directions, although the complexity of such an approach means that it is not preferred.

Figures 1-5 show that the base has a square shape but it will be understood that the base could be circular or have another shape. Furthermore, the support framework shown in Figures 1-5 comprises four arms from which the guide ring is supported: it will be understood that the support framework may comprise a greater or lesser number of arms than four. As an alternative to a framework comprising one or more discrete arms the support framework may comprise a unitary support structure that provides the necessary support to the apparatus.

It will be understood that an apparatus according to the present invention may be used to install other types of cable and wire than the jumper cable discussed above. For example, it may be used to install metallic cables (which may carry electrical data signals or power [such as for example, cat 5 or 6 computer data cables, telephone extension cable, bell wire, audio speaker wire, etc.]), optical fibre cable or a hybrid fibre-metallic cable.

## Claims

1. A cable installation apparatus comprising:
a base for receiving a cable spool;
a support framework comprising a guide ring;
a rotor arm comprising a guiding means wherein, in use,
a cable spool is placed on the base
a free end of a cable received on the cable spool is passed through the rotor arm guiding means and the guide ring; and
the rotor arm is rotated relative to the cable spool, the rotation causing the cable received on the cable spool to be unwound from the cable spool.

2. A cable installation apparatus according to Claim 1, wherein the apparatus further comprises a vertical axle received upon the base, wherein, in use, a cable spool may be received upon the vertical axle.

3. A cable installation apparatus according to Claim 2, wherein, in use, the rotor arm is coupled to the vertical axle.

4. A cable installation apparatus according to any preceding Claim, wherein the apparatus further comprises drive means, the drive means, in use, being arranged to rotate the rotor arm relative to a cable spool received upon the base.

5. A cable installation apparatus according to Claim 4, wherein the drive means is arranged to, in use, rotate the rotor arm.

6. A cable installation apparatus according to Claim 4, wherein the drive means is arranged to, in use, rotate the cable spool.

7. A cable installation apparatus according to Claim 5, wherein the rotor arm is fixedly coupled to the vertical axle and the drive means is arranged to, in use, rotate the vertical axle.

8. A cable installation apparatus according to Claim 5, wherein the rotor arm is rotatably coupled to the vertical axle

9. A cable installation apparatus according to Claim 6, wherein a cable spool is received on a rotatable central region of the base and the drive means is arranged to, in use, rotate the base central region.

10. A cable installation apparatus according to Claim 6, wherein a cable spool is received on a rotatable central region of the base and is coupled to the vertical axle such that the drive means is arranged to, in use, rotate the vertical axle.
